(19)

Europäisches
Patentamt

European
Patent Office

Office européen
des brevets

(11) **EP 4 117 940 B1**

(12) **EUROPEAN PATENT SPECIFICATION**

(45) Date of publication and mention
of the grant of the patent:
**16.04.2025   Bulletin 2025/16**

(21) Application number: **21708770.9**

(22) Date of filing: **08.01.2021**

(51) International Patent Classification (IPC):
**B60G 17/0165** *(2006.01)*     **B60G 17/016** *(2006.01)*
**B60G 17/0195** *(2006.01)*     **B60G 3/14** *(2006.01)*

(52) Cooperative Patent Classification (CPC):
**B60G 17/0165; B60G 3/14; B60G 17/0164;**
**B60G 17/0195;** B60G 2200/13; B60G 2200/132;
B60G 2204/30; B60G 2300/50; B60G 2400/821;
B60G 2401/142; B60G 2401/16; B60G 2800/012;
B60G 2800/014; B60G 2800/016; Y02T 10/72

(86) International application number:
**PCT/JP2021/001389**

(87) International publication number:
**WO 2021/181871 (16.09.2021 Gazette 2021/37)**

(54) **METHOD AND VEHICLE FOR CONTROLLING MOTIONS OF THE VEHICLE**

VERFAHREN UND FAHRZEUG ZUR STEUERUNG DER BEWEGUNGEN DES FAHRZEUGS

PROCÉDÉ ET VÉHICULE POUR CONTROLER LES MOUVEMENTS DU VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2020   US 202016816551**

(43) Date of publication of application:
**18.01.2023   Bulletin 2023/03**

(73) Proprietor: **Mitsubishi Electric Corporation
Tokyo 100-8310 (JP)**

(72) Inventors:
• **DANIELSON, Claus**
  **Cambridge, Massachusetts 02139-1955 (US)**
• **CHEN, Di**
  **Cambridge, Massachusetts 02139-1955 (US)**

(74) Representative: **Pfenning, Meinig & Partner mbB
Patent- und Rechtsanwälte
Joachimsthaler Straße 10-12
10719 Berlin (DE)**

(56) References cited:
WO-A2-2012/173354          CN-B- 108 327 714
DE-A1- 102017 116 733    US-A1- 2008 073 138
US-A1- 2014 309 902

• NAOYA OCHI ET AL: "Proposal of roll angle
control method using positive and negative anti-
dive force for electric vehicle with four in-wheel
motors", MECHATRONICS (ICM), 2013 IEEE
INTERNATIONAL CONFERENCE ON, IEEE, 27
February 2013 (2013-02-27), pages 816 - 821,
XP032409524, ISBN: 978-1-4673-1386-5, DOI:
10.1109/ICMECH.2013.6519146

• SCHRUTH RAINER ET AL: "Driving safety and
comfort enhancements through efficient usage
of e-powertrain functions", 2013 WORLD
ELECTRIC VEHICLE SYMPOSIUM AND
EXHIBITION (EVS27), IEEE, 17 November 2013
(2013-11-17), pages 1 - 10, XP032654310, DOI:
10.1109/EVS.2013.6915010

• DI CHEN ET AL: "MITSUBISHI ELECTRIC RESEARCH LABORATORIES https Improving Passenger Comfort by Exploiting Hub Motors in Electric Vehicles: Suspension Modeling", ASME DYNAMIC SYSTEMS AND CONTROL CONFERENCE, 20 March 2021 (2021-03-20), pages 2020, XP055804241, Retrieved from the Internet <URL:https://www.merl.com/publications/docs/TR2021-019.pdf> [retrieved on 20210512]

**Description**

[Technical Field]

The present invention relates generally to a vehicle and a method for achieving reduced chassis motion using individually actuated wheels, without additional actuators i.e. an active suspension.

[Background Art]

An active suspension is a type of vehicle suspension for reducing the motion of the vehicle-chassis due to an uneven road surface. An active suspension uses actuators that reconfigure the suspension in response to the road surface. For instance, an active suspension can use a linear motor to move wheels up or down to reduce the impact of driving over a pot-hole. Active suspensions provide improved ride comfort, but require dedicated actuator hardware that can be potentially expensive. Naoya, Ochi, et al.: "Proposal of roll angle control method using positive and negative anti-force for electric vehicle with four in-wheel motors", 2013 IEEE Int. Conf. on Mechatronics (ICM), 27 February 2013, describes a roll angle control system with equalized workload control, and proposes the consideration of cooperative control of roll, pitch and yaw. DE 10 2017 116733 A1 describes a control device for at least one wheel hub motor of a vehicle with an input interface for receiving a status signal for describing a current body movement of the vehicle, with a control module determining a wheel hub motor signal in response to the body movement, and with an output interface for outputting the wheel hub motor signal for driving the at least one wheel hub motor. Schruth, R. et al. "Driving safety and comfort enhancements through efficient usage of e-powertrain functions", 2013 WORLD ELECTRIC VEHICLE SYMPOSIUM AND EXHIBITION (EVS27), IEEE, 17 November 2013, addresses driving safety and comfort enhancements through e-powertrain functions.

Document WO2012/173354 describes a roll motion control device for an in-wheel motor-driven electric vehicle.

Anti-lift and anti-squat suspensions are types of vehicle suspension for reducing the motion of the vehicle-chassis due to acceleration and/or deceleration of the vehicle. When a vehicle accelerates, inertia causes the vehicle to pitch resulting in the front-end lifting and the rear-end squatting. For rear-wheel drive vehicles, an anti-squat suspension uses an angled suspension bar to redirect some of the traction force produced rear-wheels into a vertical force that counters the squatting of the rear-end. Hence the name "anti-squat" suspension. For front-wheel drive vehicles, an anti-lift suspension uses an angled suspension bar to counter the natural lifting of the front-end during acceleration. Hence the name "anti-lift" suspension. The anti-lift/squat features of a suspension are a result of the geometry of the suspension design and only require standard (passive) hardware. Suspensions designed for the anti-lift/squat feature are universal in commercial vehicles.

[Summary of Invention]

Some embodiments of present disclosure are based on recognition that future (e.g. electric) vehicles will employ (e.g. 4) individual motors to independently drive each wheel, rather than a single motor/engine that drives 2 or 4 wheels together. This invention can provide the anti-lift/squat feature of vehicle suspensions and the independently driven wheels to provide the effect of an active suspension, without any additional hardware (other than the individual motors that independently actuator each wheel). This invention is based on the realization that the vertical forces on the vehicle chassis can be manipulated through the anti-lift/squat suspension forces when the wheels are independently driven. For instance, a vehicle driving over a pot-hole will initial pitch forward when the front-wheels enter the pot-hole. This forward pitch can be counter by producing a backward pitch by applying a traction force on the front-wheels and a braking-force on the rear-wheels. When the rear-wheels enter the pot-hole, the opposite forces can be applied. By using a hardware feature (anti-lift/squat) already present in vehicle suspensions and another hardware feature (independently driven wheels) that we predict will be adopted in the future, this invention produces the improvement in ride comfort provided by active suspensions, but without any additional hardware required.

According to the present invention, a vehicle according to claim 1 is provided for controlling motions of a vehicle having wheels. The vehicle comprises a control system. The control system includes suspension units configured to support the wheels respectively driven by motors controlled by throttles; a set of sensors configured to detect(measure) the motions of the vehicle, wherein the motions are represented by lift, pitch, and roll values of the vehicle; a road roughness sensor; an input/output interface connected to: the set of sensors and the road roughness sensor; one or more processor, a memory device storing computer-implemented programs including a road roughness prediction program, an actuator control program and a throttle allocator program, an allocation module implemented through execution, by the one or more processor, of the throttle allocator program, and configured, in connection with the sensors, to generate and transmit allocated throttle signals to the throttles to minimize the motion by solving an optimization problem related to the motion by executing an optimization algorithm that computes a throttle/brake allocation that minimizes chassis motion in real-time;

and a motor control unit configured to drive each of the motors via the throttles according to the allocated throttle signals. The allocated throttle signals drive the motors to move the wheels on the right side closer together and the wheels on the left side farther apart to create a roll motion in response to a detected roll motion in the opposite direction. A road roughness measured by the road roughness sensor is used to compute traction forces, to be allocated to the wheels, and a steering angle of the vehicle, to be set, to reduce the chassis motion due to road roughness while maintaining drivability.

Further, a method according to the independent method claim 2 is provided for controlling motions of a vehicle having wheels. In this case, suspension units are configured to support the wheels, and the method includes driving the wheels respectively by motors controlled by throttles; measuring the motions of the vehicle using a set of sensors, wherein the motions are represented by lift, pitch, and roll values of the vehicle; computing and transmitting allocated throttle signals to the throttles to minimize the motion by solving an optimization problem related to the motion by executing an optimization algorithm that computes a throttle/brake allocation that minimizes chassis motion in real-time; and driving each of the motors via the throttles according to the allocated throttle signals. The allocated throttle signals drive the motors to move the wheels on the right side closer together and the wheels on the left side farther apart to create a roll motion in response to a detected roll motion in the opposite direction, using a road roughness measured by a road roughness sensor to compute traction forces and a steering angle of the vehicle, and allocating the computed traction forces to the wheels and setting the computed steering angle, to reduce the chassis motion due to road roughness while maintaining drivability.

The presently disclosed embodiments will be further explained with reference to the attached drawings. The drawings shown are not necessarily to scale, with emphasis instead generally being placed upon illustrating the principles of the presently disclosed embodiments.

[Brief Description of Drawings]

[Fig. 1]

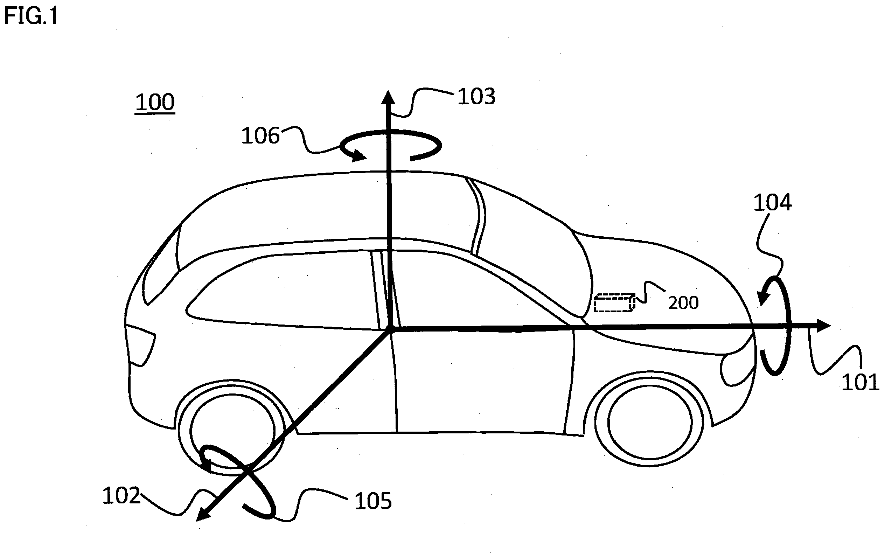

Figure 1 shows an illustration for describing the definitions of motions of a vehicle, according to embodiment of this disclosure.
[Fig. 2]

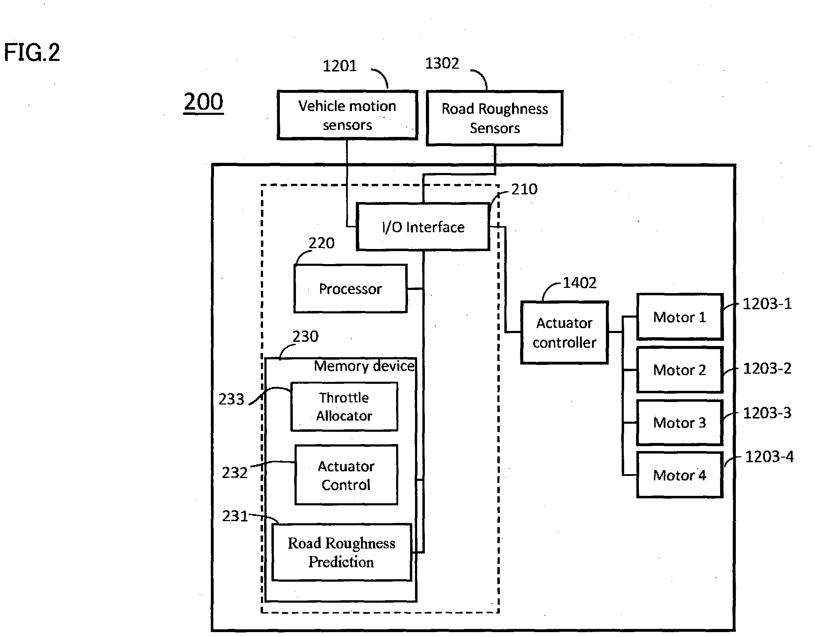

Figure 2 shows an actuator control system, according to embodiments of the present disclosure.
[Fig. 3A]

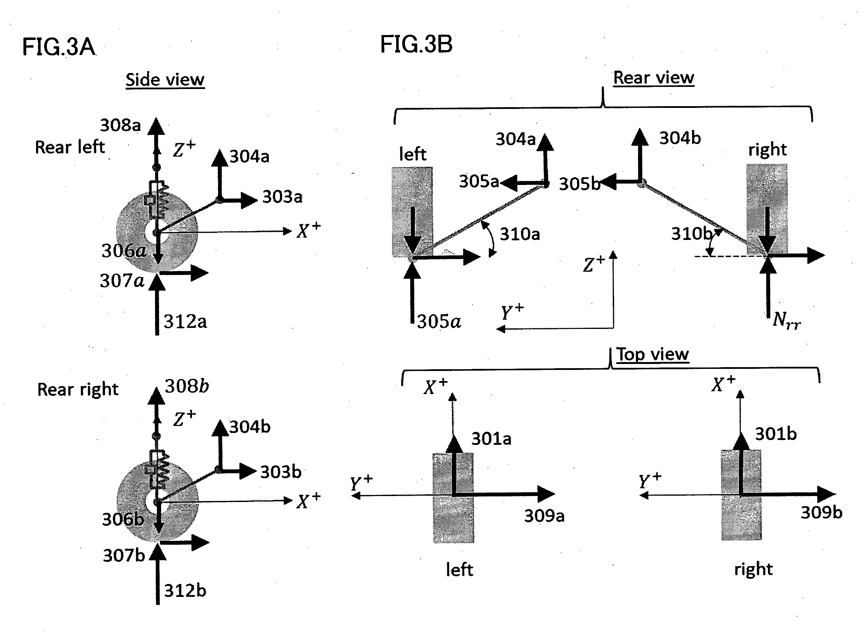

Figures 3A shows the free-body diagram of a front suspension of a vehicle, according to embodiments of the present disclosure.
[Fig. 3B]
Figures 3B shows the free-body diagram of a front suspension of a vehicle, according to embodiments of the present disclosure.
[Fig. 4A]

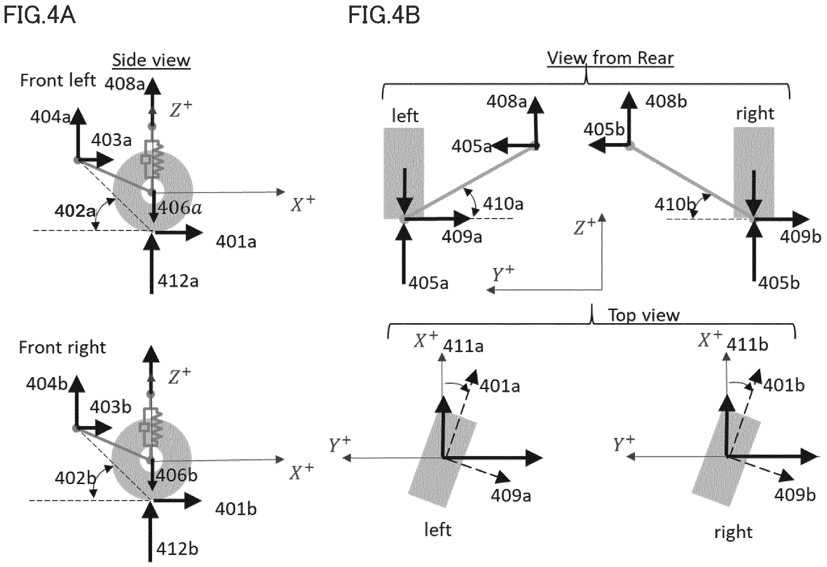

Figures 4A shows the free-body diagram of a rear suspension of a vehicle, according to embodiments of the present disclosure.
[Fig. 4B]
Figures 4B shows the free-body diagram of a rear suspension of a vehicle, according to embodiments of the present disclosure.
[Fig. 5]

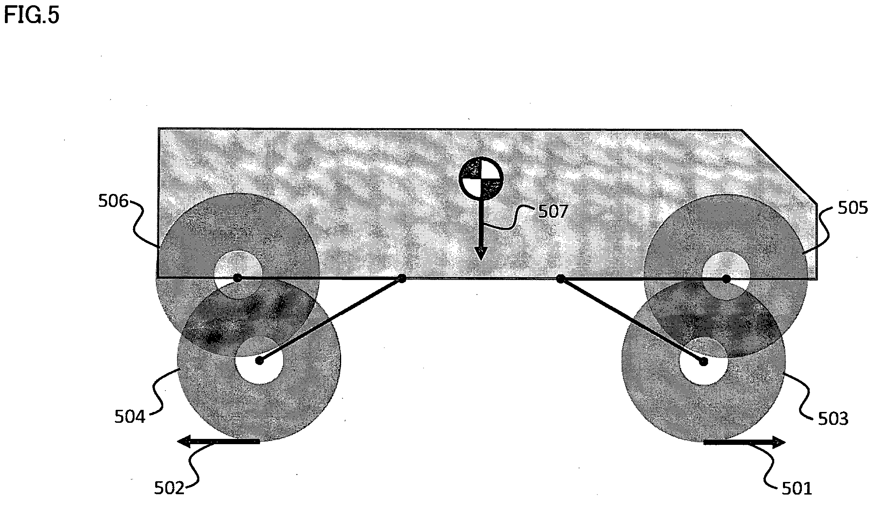

Figure 5 is a schematic for illustrating how traction force allocation produces lift, of a vehicle, according to embodiments of the present disclosure.
[Fig. 6]

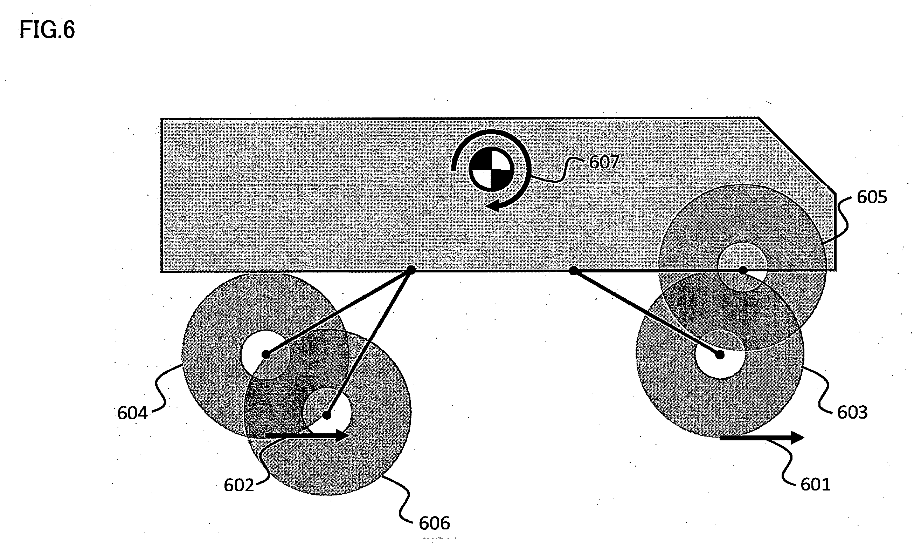

Figure 6 is a schematic for illustrating how traction force allocation produces pitch, of a vehicle, according to embodiments of the present disclosure.
[Fig. 7]

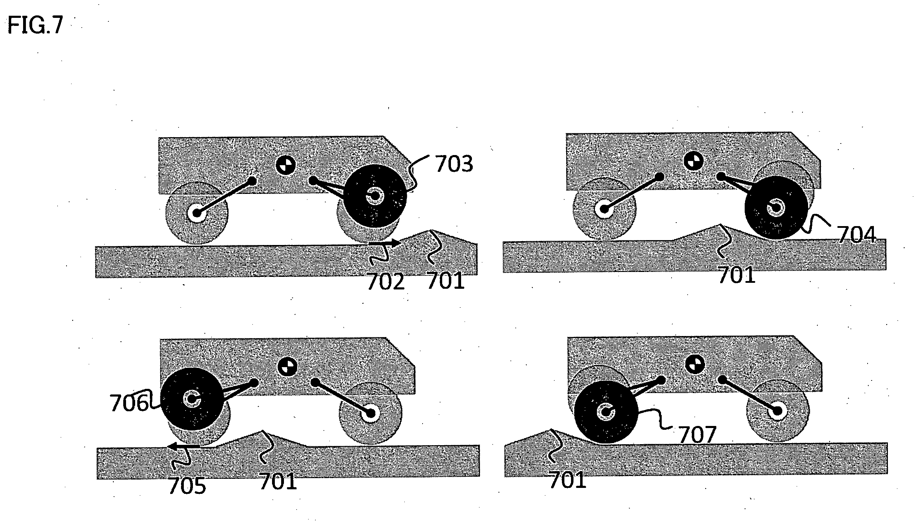

Figure 7 shows examples of how traction force allocation are performed to avoid chassis motion when driving over a bump on the road, according to embodiments of the present disclosure.
[Fig. 8]

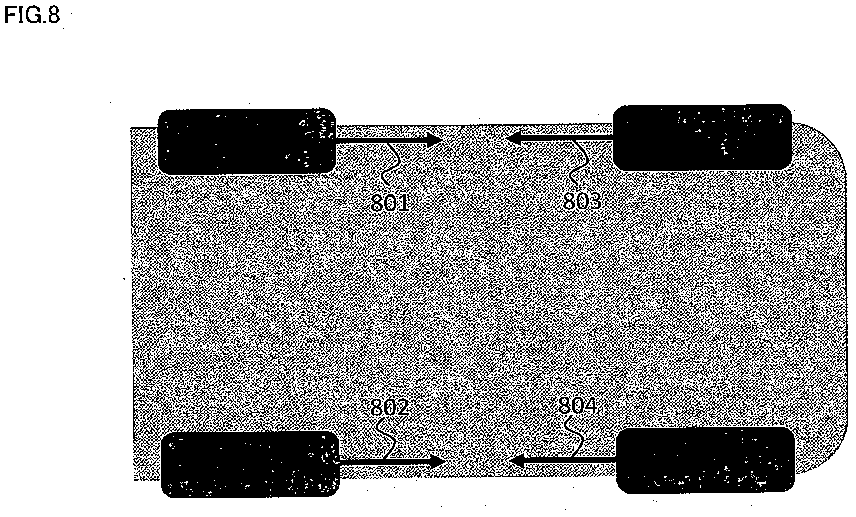

Figure 8 shows a traction force allocation that result in lift motion without any pitch, roll, or yaw motion, according to embodiments of the present disclosure.
[Fig. 9]

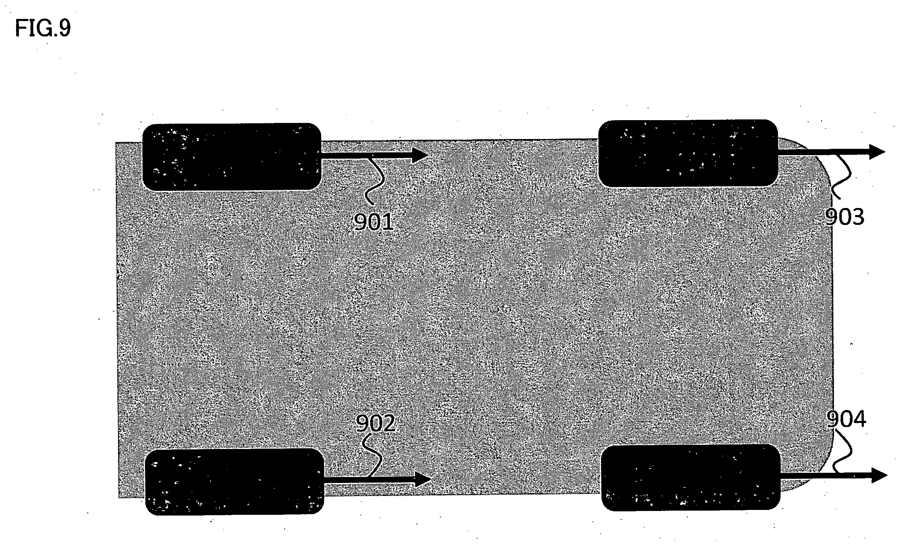

Figure 9 shows a traction force allocation that result in pitch motion without any lift, roll, or yaw motion, according to embodiments of the present disclosure.
[Fig. 10]

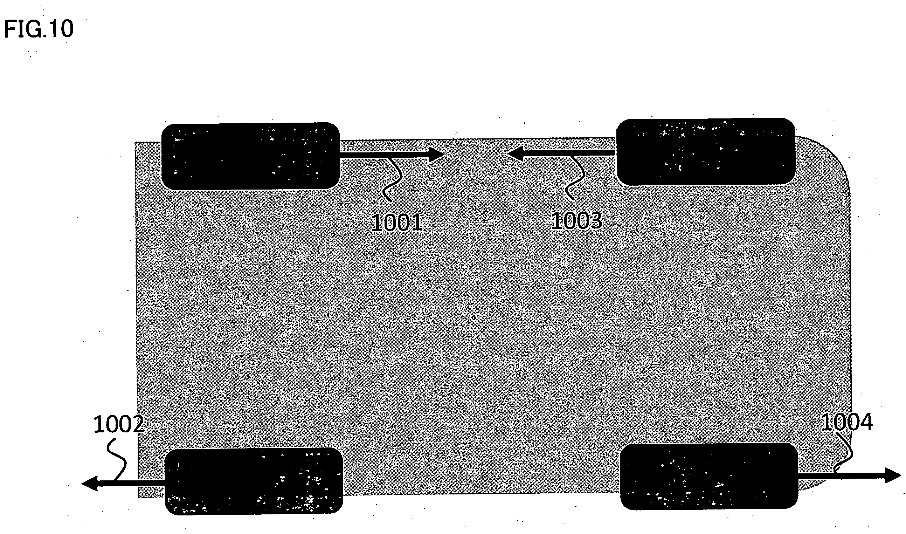

Figure 10 shows a traction force allocation that result in roll motion without any lift, pitch, or yaw motion, according to embodiments of the present disclosure.

[Fig. 11]

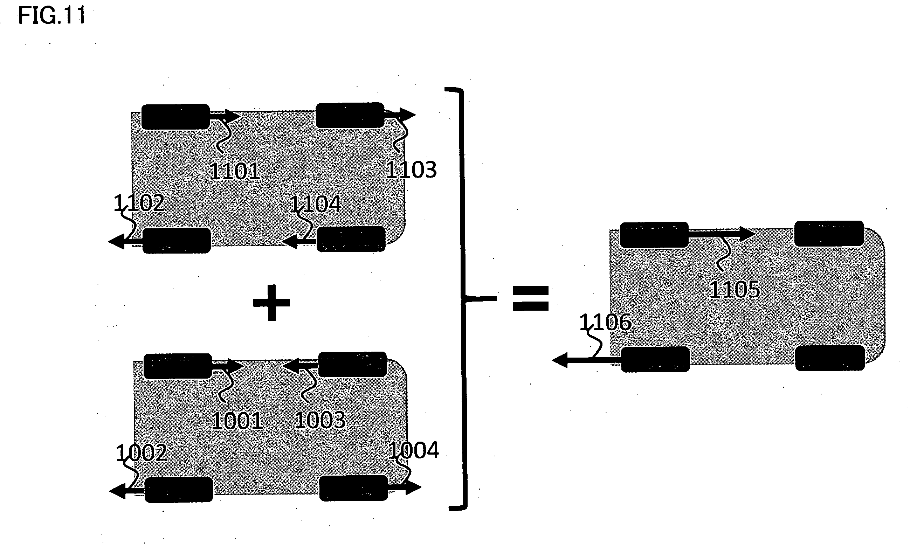

Figure 11 shows a traction force allocation that result in yaw motion without any lift, roll, or pitch motion, according to embodiments of the present disclosure.

[Fig. 12]

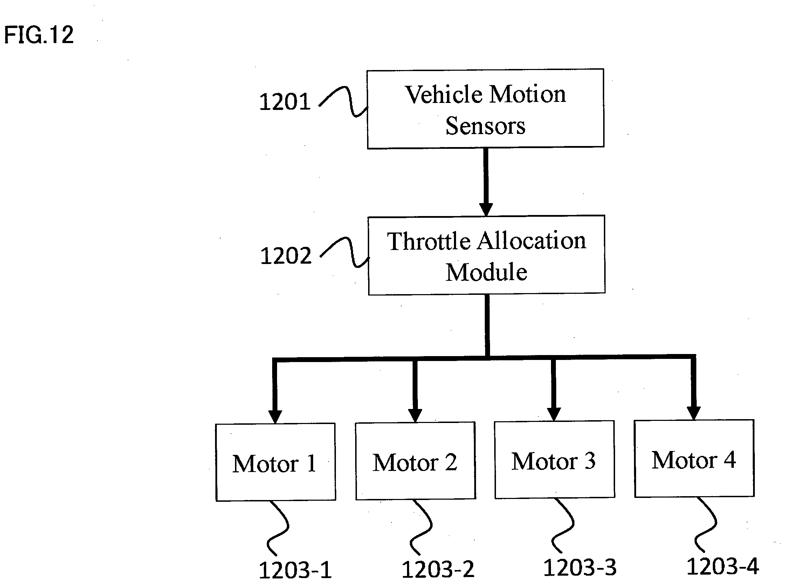

Figure 12 shows a block diagram of a throttle allocation system, according to embodiments of the present disclosure.

[Fig. 13]

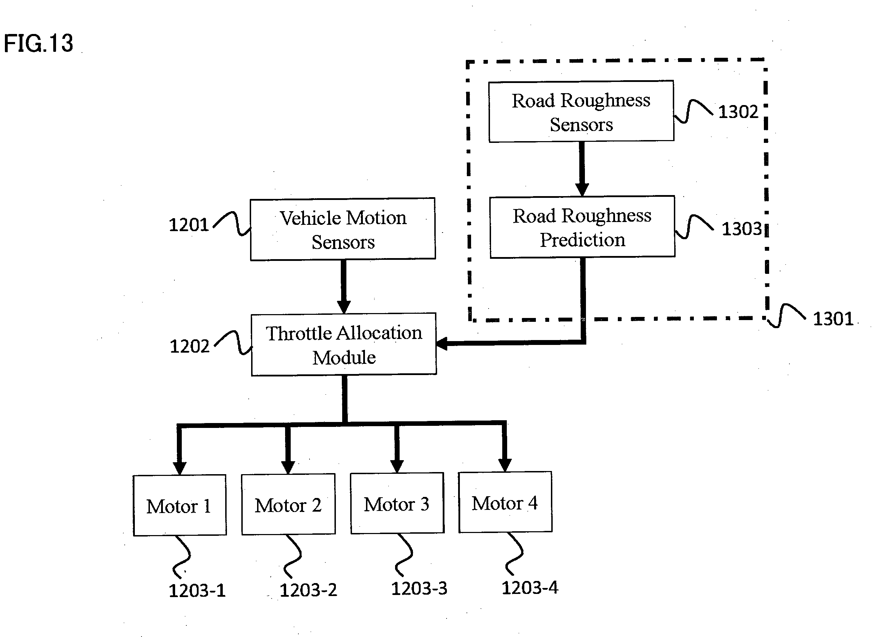

Figure 13 shows a block diagram for describing a throttle allocation method, according to embodiments of the present disclosure.

[Fig. 14A]

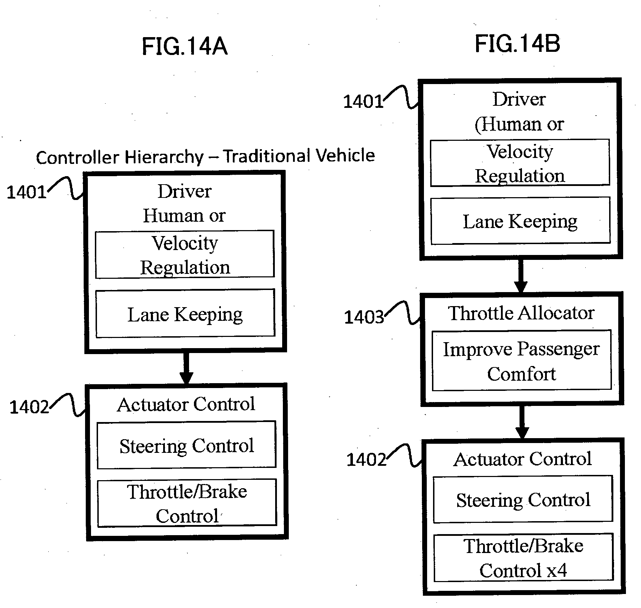

Figures 14A is a drawing for describing actuator control methods of a vehicle, according to embodiments of the present disclosure.

[Fig. 14B]

Figures 14B is a drawing for describing actuator control methods of a vehicle, according to embodiments of the present disclosure.

While the above-identified drawings set forth presently disclosed embodiments, other embodiments are also contemplated, as noted in the discussion. This disclosure presents illustrative embodiments by way of representation and not limitation. Numerous other modifications and embodiments can be devised by those skilled in the art.

[Description of Embodiments]

The following description provides exemplary embodiments only, and is not intended to limit the scope, applicability, or configuration of the disclosure. Rather, the following description of the exemplary embodiments will provide those skilled in the art with an enabling description for implementing one or more exemplary embodiments. Contemplated are various changes that may be made in the function and arrangement of elements .

Specific details are given in the following description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicated like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process may be terminated when its operations are completed, but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Embodiments of the Present Disclosure

Figure 1 shows an example of a vehicle 100 (e.g. a car) which is included to define terms used in this disclosure. The vehicle 100 may include (at least) 4 wheels that are attached to the chassis through a suspension system (not shown). In the figure, three axes (x-axis, y-axis and z-axis) are illustrated to describe rotations (102, 103, 104)) of the vehicle 100 about respective axes.

The x-axis 101 of the coordinate frame attached to the vehicle is called the longitudinal direction. Longitudinal motion includes the position, velocity, acceleration, jerk, etc. of the chassis in this direction. Rotation 104 of the chassis about the x-axis 101 is called roll. Roll motion includes the angle, angular velocity, angular acceleration, etc. of the chassis in this direction.

The y-axis 102 of the coordinate frame attached to the vehicle is called the lateral direction. Lateral motion includes the position, velocity, acceleration, jerk, etc. of the chassis in this direction. Rotation 105 of the chassis about the y-axis 102 is called pitch. Pitch motion includes the angle, angular velocity, angular acceleration, etc. of the chassis in this direction.

The z-axis 103 of the coordinate frame attached to the vehicle is called the lift direction. Lift motion includes the position, velocity, acceleration, jerk, etc. of the chassis in this direction. Rotation 106 of the chassis about the z-axis 103 is called yaw. Yaw motion includes the angle, angular velocity, angular acceleration, etc. of the chassis in this direction.

According to embodiments of the present invention, it becomes possible to improve passenger comfort by reducing the motion of the vehicle chassis. For instance, in an autonomous vehicle the passengers may want to read during their commute but unwanted chassis motion could cause motion-sickness.

However, it is important that the invention does not eliminate all chassis motion since the purpose of a vehicle is to move the chassis (and its contents) between locations. There are 2 main factors that cause motion in the vehicle chassis; how the vehicle is driven and the quality of the road surface over which the vehicle is driven. The invention reduces chassis motion due to the road roughness without changing how the vehicle is driven. On the contrary, one of the features of the invention is that it maintains the drivability of the vehicle. Drivability means that the vehicle responds to the driver's (human or autonomous) commands in a predictable and repeatable manner. After all, the simplest way to eliminate a bumpy ride is to stop the vehicle, however that would not be a right solution. It is critical that the invention maintains drivability, so that the driver can safely and usefully operate the vehicle.

The driver controls the motion of the vehicle (and its chassis) in the longitudinal and yaw directions. The gas/brake pedals control the longitudinal acceleration (and thus velocity and position) and the steering wheel controls the yaw-rate (and thus yaw direction). To improve comfort, the invention allocates traction forces to each of the wheels and sets the steering angle to achieve the driver specified acceleration and yaw-rate while reducing the motion of the chassis in the lift, pitch, and roll directions. Thus, in this disclosure, comfort will be synonymous with lift, pitch, and roll motion of the chassis. According to the present invention, it is possible to reduce lift, pitch, and roll motion of the chassis without sacrificing drivability since this invention is only applicable to vehicles with independently actuated wheels, which provides 3 additional degrees of freedom when maintaining drivability i.e. there are 4 "throttles" instead of 1 for vehicles with independently driven wheels. The invention can also reduce the lateral motion of the vehicle which depends tire slippage to reduce wear on the vehicle tires.

Figure 2 shows an actuator control system 200 arranged in the vehicle 100, according to an embodiment of the claimed invention. The actuator control system 200 includes an input/output interface (I/O) 210 connected to a vehicle sensor(s) 1201 and road roughness sensor(s) 1302, one or more processor 220, a memory device 230 storing computer(processor)-implemented programs including a road roughness prediction program 231, an actuator control program 232 and a throttle allocator program 233.

The interface 210 is configured to form a wired network of the vehicle or a wireless network of the vehicle 100 and perform data communications among the actuator control system 200, the vehicle sensor(s) 1201, the road roughness sensors 1302 and the motors 1-4 of the wheels of the vehicle 100. The processor 220 is configured to perform the road roughness prediction program 231, the actuator control program 232 and the throttle allocator program 233 in response to sensor data from the vehicle sensor(s) 1201 and the road roughness sensors 1302 via the interface 210. Further, the processor 220 is configured to transmit control data to an actuator controller 1402 via the interface 210 while performing the road roughness prediction program 231, the actuator control program 232 and the throttle allocator program 233 in response to signals (data) from the vehicle sensor(s) 1201 and the road roughness sensor 1302. The actuator controller 1402 performs the throttle allocations of the motors 1-4 and the steering control of the vehicle 100 based on the control data with respect to the throttle allocation to each of the motors 1-4 and the steering control from the processor 220.

The memory device 230 can be one or more memory units, which may include one or combination of a random access memory (RAM), a read-only memory (ROM) and a nonvolatile memory and a hard drive. Further, the system 200 may include the actuator controller 1402 that is configured to receive output data (signals) from the processor 220 via the interface 210, and perform the steering control and the throttle/brake control of each of four motors 1-4 using throttle/brake controllers (torque allocation module) 1203 (1203-1, 1203-2, 1203-3 and 1203-4) of the wheels based on the received output data signals.

According to the claimed invention, the actuator control system 200 allocates the traction forces to each of the wheels and sets the steering angle to reduce the chassis motion due to road roughness while maintaining drivability. According to the invention, the road roughness is measured by the road roughness sensors 1302 and these measurements are used to compute the traction forces and steering angle of the vehicle 100. In another non-claimed embodiment, the road roughness is unmeasured, but the resulting motion of the chassis is measured using the sensors 1201 (vehicle motion sensors 1201) on the vehicle 100 or external sensors (not shown) arranged on/in the vehicle communicating with the actuator control system 200. In this embodiment, the motion sensors 1201 are used to compute the traction forces and steering angle of the vehicle 100. An embodiment of the claimed invention uses measurements of both the road roughness and chassis motion using the vehicle motion sensors 1201 and the road roughness sensors 1302 to compute the traction forces and steering angle that reduce chassis motion and maintain drivability.

According to some embodiments of the invention, it is possible to deal with wheeled vehicles (e.g. cars) that have at least 4 independently actuated wheels arranged to the motors 1-4. In this case, each of the actuated wheels is configured to control both the throttle and braking forces produced by each wheel independently each other.

This invention can also be applied to vehicles with more than 4 independently actuate wheels or groups of independently actuated wheels. Independent actuation can be accomplished for instance by using "hub motors" located in each wheel, however this invention is also applicable when the individual motors are external to the wheel.

Traditional vehicles have two actuators that are used to drive the vehicle: (1) the throttle/brake and (2) the steering angle of the e.g. front tires. These actuators are used to follow a desired acceleration and yaw-rate specified by the driver, which can be human or an autonomous driving system. For a human driver, the desired acceleration and yaw-rate are specified by the position of the gas/brake pedal and the steering wheel angle. For an autonomous driver, the desired acceleration and yaw-rate are specified by different methods. Note that traditional vehicles have 2 actuators which are used to achieve 2 driving objectives i.e. throttle/brake and steering wheel track the desired acceleration and yaw-rate.

An embodiments of the invention is based on the realization that vehicles with independently throttled/braked wheels have 3 additional degrees of freedom i.e. 4 throttle/brake and 1 steering angle. It was further realized that these additional degrees of freedom can be used to improve passenger comfort by reducing the lift, pitch, and roll motion of the vehicle chassis.

It should be noted that it is non-obvious how the throttle/brake and steering angle affect the lift, pitch, and roll motion of the vehicle chassis. Some embodiments of the invention are based on the realization that the longitudinal and lateral forces produced by the wheels create vertical forces on the chassis due to the way in which vehicle suspensions are designed. Thus, the relevant features of vehicle suspensions are discussed next.

Figures 3A and 3B show a trailing arm front suspension. It is well known that other suspension designs are dynamically equivalent to the trailing arm suspension, thus for simplicity we will focus on our discussion to this type of suspension even though some embodiments of the invention are applicable to other suspension designs. The key feature of the trailing arm suspension is the suspension arm which rotates around a pivot. Thus, the wheel cannot move horizontally (i.e. in the longitudinal or lateral direction) without also moving vertically due to the rotation of the suspension arm.

Figures 3A and 3B show the forces on the front suspension, illustrating a free-body diagram of the front suspension. The front suspension exerts 4 types of forces on the vehicle chassis (a for left forces and b for right forces):

Longitudinal reaction forces 303a and 303b: The left and right tires must produce driving forces 301a and 301b for the vehicle to accelerate/decelerate. The suspension transmits these driving forces 301a and 301b to the vehicle chassis, producing in the longitudinal forces 303a and 303b.

Lateral reaction forces 305a and 305b: The left and right tires produce sliding forces 309a and 309b, respectively, when the vehicle to turn i.e. the wheels are gripping the road. The suspension transmits these tire-sliding forces 309a and 309b to the chassis, producing the lateral forces 305a and 305b, respectively.

Spring-damper forces 308a and 308b: The deformation of the springs and the movement of the dampers in the suspension produces forces 308a and 308b on the chassis. The deformation/movement of the springs/dampers is caused either by the vehicle chassis moving relative to the road or by the road height "moving" relative to the vehicle i.e. the vehicle is driving over a bump. The spring-damper forces damp the relative chassis-road motion and restore it to the default position i.e. chassis is flat relative to the road.

Vertical reaction forces 304a and 304b: Since the suspension arms are angled, 310a/b, the longitudinal 303a/b and lateral 305a/b forces produce a torque on the suspension arm. In quasi-steady-state, this torque is balanced by the vertical reaction forces 304a/b. Applying a throttle force to one of the front wheels results in a negative vertical reaction force 304a/b on the suspension. Since Figure 3 shows the front suspension, these vertical reaction forces 304a/b are the anti-lift forces that prevent the front end of the vehicle front lifting during acceleration. Some embodiments of the invention are based on the realization that since these vertical reaction forces 304a/b depend on the actuated driving forces 303a/b, they can be manipulated to control the lift, pitch, and roll motion of the chassis.

Figures 4A and 4B show the free-body diagram of one of the rear suspension assemblies. Similar to the front suspension assembly, we can derive how a throttle force on the rear wheel produces a positive vertical reaction force on the vehicle suspension. This force is called the anti-squat force since it prevents the rear-end of the vehicle from "power squatting" during acceleration.

This actuator control system 200 may use these anti-lift and anti-squat forces to manipulate the motion of the vehicle chassis. For instance, Figure 5 shows how the throttle/brake forces to the front and rear wheels can affect the vehicle lift. The arrows 501 and 502 represent driving forces produced by the front and rear tire respectively. For simplicity, since Figure 5 only shows the motion of the vehicle in the pitch-plane. Thus, the forces on the front left and right tires in Figure 5 are the same and likewise for the rear left and right tires. Indeed, for 3D control of the chassis motion it is necessary to applied different forces to the left and right of the vehicle. The traction forces 501 and 502 are in opposition direction i.e. the front wheel is throttling and the rear wheel is braking. This causes the wheels to rotate from the default positions 503 and 504, respectively, into the positions 505 and 506, respectively. This causes the chassis 507 to drop (move in negative lift direction) as shown.

Another example of the lift and pitch motion in the pitch-plane is shown in Figure 6. In Figure 6, the same traction forces 601 and 602 are applied to the front and rear wheels. The front wheel rotates forward from the default position 603 to 605 and the rear wheel rotates backwards from the default position 604 to 606. This will cause the chassis 607 to pitch forward as shown. Note that the forward pitching is in opposition to the natural backward pitching that the vehicle will undergo when accelerating. This is called an anti-pitch effect.

An analogous effect occurs in 3 dimensions (i.e. not restricted to the pitch-plane). However, the vehicle dynamics are more complicated since the throttle/braking forces are no longer the only forces acting on the tires. Instead, we must now consider the sliding forces produced by the tires moving in the transverse direction. Nonetheless, a model relating the throttle/brake forces and the steering angle to the lift, pitch, and roll motion of the chassis can be derived. For instances,

$$M_s\ddot{z} = -M_s g - \sum_{ij} F_{sji} + F_{zji}$$

$$J_X\ddot{\phi} = (F_{sfr} - F_{sfl})\frac{L_f}{2} + (F_{srr} - F_{srl})\frac{L_r}{2}$$
$$+ (F_{zfr} - F_{zfl})\frac{L_f}{2} + (F_{zrr} - F_{zrl})\frac{L_r}{2}$$
$$- (F_{yfr} + F_{yfl})\big((h+z) - h_f\big)$$
$$- (F_{yrr} + F_{yrl})\big((h+z) - h_r\big)$$

$$J_Y\ddot{\theta} = F_{sfr}b_f + F_{sfl}b_f - F_{srr}b_r - F_{srl}b_r$$
$$+ \big(F_{xfr} + F_{xfl}\big)\big(h + z - h_f\big)$$
$$+ \big(F_{xrr} + F_{xrl}\big)\big(h + z - h_r\big)$$
$$+ \big(F_{zfr} + F_{zfl}\big)\big(b_f - a_f\big) - \big(F_{zrr} + F_{zrl}\big)\big(b_r - a_r\big)$$
$$+ \big(F_{zfr} + F_{zfl}\big)b_f - \big(F_{zrr} + F_{zrl}\big)b_r$$

$$J_Z\ddot{\psi} = (-F_{xfr} + F_{xfl})\frac{L_f}{2} + (-F_{xrr} + F_{xrl})\frac{L_r}{2}$$
$$- (F_{yfr} + F_{yfl})b_f + (F_{yrr} + F_{yrl})b_r$$

$$M_s V_x\dot{\beta} = -M_s V_x\dot{\psi} + \sum_{ij} F_{xji}\sin\beta - F_{yji}\cos\beta \tag{1}$$

where the spring-damper forces are given by

$$F_{sri} = -\bar{F}_{sij} + K_r\Delta z_{ij} + C_r\Delta\dot{z}_{ij},$$

We can use a model relating the throttle/brake forces and the steering angle to the lift, pitch, and roll motion of the chassis for design. However, this model is not required for implementation nor does the model need (1). Indeed, a more accurate physics-based model or a machine-learning model could replace the model (1). The variables of the model are summarized in tables 1 and 2.

[Table 1]

| | |
|---|---|
| $\beta$ | Slip ratio: ratio of vehicle velocities in longitudinal and lateral directions |
| $\Delta z_{ij}$ and $\Delta\dot{z}_{ij}$, | Deflects and deflection rates of the front/rear and left/right suspensions |
| $F_{xij}$ | Longitudinal reaction forces 303a/b and 403a/b |
| $F_{yij}$ | Lateral reaction forces 309a/b and 409a/b |
| $F_{zij}$ | Vertical reaction forces 304a/b and 404a/b |
| $F_{sij}$ | Spring-damper forces 308a/b and 408a/b |

[Table 2]

| $b_f, b_r$ | Front/rear wheel base: longitudinal distance from vehicle CG to front/rear tires |
|---|---|
| $L_f, L_r$ | Front/rear track width: lateral distance between left and right wheels in the front and rear of the vehicle. |
| $M_s$ | Mass of the chassis |
| $J_X, J_Y, J_Z$ | Moments of inertia of the chassis about the x, y and z direction i.e. roll, pitch, and yaw moments of inertia |
| $K_{ij}, C_{ij}$ | Spring-stiffness and damping ratio of each of the suspension assemblies |

Using the model (1) it is possible to determine allocations of the throttle/braking forces and steering angle that produce 3-dimensional motions analogous to those shown in Figures 5 and 6.

Figure 8 shows an example of the throttle/braking force allocation that lifts the chassis without any pitch, roll, or yaw motion. Both the left and right rear tires have positive (i.e. throttle) forces 801 and 802 causing the rear-end to lift due to the anti-squat force. The left and right front tires have negative (i.e. brake) forces 803 and 804 causing the front-end of the vehicle to lift since the resulting anti-lift force is negative. This force pattern is similar to Figure 5. The relative magnitude of the forces 801-804 depends on the numerical values of the parameters of the model.

Figure 9 shows an example of the throttle/braking force allocation that pitches the chassis without any lift, roll, or yaw motion. All the tires have forces 901-904 in the same direction which will cause the vehicle to pitch backward. This force pattern is similar to Figure 6. The relative magnitude of the forces 901-904 depends on the numerical values of the parameters of the model.

Figure 10 shows an example of the throttle/braking force allocation that rolls the chassis without any lift, pitch, or yaw motion. The tires on the right-side of the vehicle produce forces 1002 and 1004 with the same pattern as Figure 5, causing the right-side of the vehicle to drop (i.e. move in negative lift direction). The tires on the left-side of the vehicle produce forces 1001 and 1003 in the opposite pattern as Figure 5, causing the left-side of the vehicle to lift. The net-result is that the center-of-mass of the vehicle remains stationary while the vehicle rolls. The relative magnitude of the forces 1001-1004 depends on the numerical values of the parameters of the model.

Figure 11 shows an example of the throttle/braking force allocation that yaws the vehicle without any lift, pitch, or roll, motion. This force allocation is more complicated since yawing/turning the vehicle will create a centripetal force that will cause it to roll. This roll motion must then be compensated. The forces 1101-1104 cause a yaw motion by applied differential forces to the left and right side of the vehicle i.e. the on the left-side the forces 1101 and 1103 are positive while on the right-side the forces 1102 and 1104 are negative. The resulting yaw motion causes the vehicle to roll. By applying the forces 1001-1004 from Figure 10, this roll motion can be canceled. Adding these forces (1101+1001, 1102+1002, 1103+1003, 1104+1004) resulting in the forces 1105 and 1106. In this allocation, differential driving forces are applied to the left-rear 1105 and right-rear 1106 tires, but no forces are applied to the front tires. This results in the vehicle turning without rolling. In practice, the relative magnitude of the forces 1001-1004 and 1101-1106 depends on the numerical values of the parameters of the model.

Further, some embodiments of the invention are based on the realization that the relationships between the throttle/braking forces and steering angle and the lift, pitch, roll, and yaw motion of the vehicle shown in Figures 8-11 can be used to improve passenger comfort. One embodiment of the invention is shown in Figure 12. In this embodiment, the system 200 may include 3 modules that work together to improve passenger comfort; a sensor module 1201 that measures (or estimates) the motion of the chassis, a torque allocation module 1203 that computes the desired allocation of driving forces using model (1), and (at least) 4 throttle/brake controllers (torque allocation module) 1203 that implement the desired traction forces for each wheel. The sensor module 1201 can include (but is not limited to) an inertia measurement using, a gravity sensor, accelerometers, a global positioning system, etc. The throttle allocation (torque allocation) module 1202 computes the throttle/brake set-points for the motor/brake controllers based on measurements of the chassis motion and knowledge of how throttle/braking forces effect chassis motion (i.e. model (1)). In an embodiment of the claimed invention, the torque allocation module could consist of a digital computer processor that executes an optimization algorithm that computes the throttle/brake allocation that minimizes chassis motion in real-time. Another illustrative example: the torque allocation module 1202 could consist of an analog circuit that implements the gains of an $H_\infty$ state-feedback controller (designed using (1)) which minimizes the integrated RMS response of the chassis motion to the integrated RMS roughness of the road.

Another embodiment of the invention is shown in Figure 13. The actuator control system 200 may include an additional module 1301 that predicts the future effects of road roughness on the chassis motion. The module 1301 includes 2 sub-modules; a sensor sub-module 1302 and a predictor sub-module 1303. The sensor sub-module 1302 senses the road ahead of the vehicle. The sub-module 1302 could consist of, for instance, a camera, or radar, or LiDAR (Light Detection and Ranging), or sonar that measures the road surface ahead of the vehicles. The predictor sub-module 1303 predicts when these road bumps will reach each of the tire of the vehicle and the effect they will have on the vehicle. For instance, the predictor sub-module 1303 could consist of a simple model that uses the current velocity of the vehicle and the distance to the bump to determine when a bump will pass beneath each tire. The torque allocation module 1202 can be modified to use this predictive information to further improve passenger comfort. For instance, if the torque allocation module includes a computer processor executing an optimization algorithm then the predicted road roughness can be included in the optimization problem to ameliorate the bump.

An example of how the actuator control system 200 can use prediction information to ameliorate bumps is shown in Figure 7. Figure 7 shows 4 snapshots of a vehicle encountering a bump 701 on the road. In the first snap-shot, the vehicle is approaching the bump 701. The actuator control system 200 applies throttle 702 to the front-tires to cause them to lift 703 over the bump 701. In the next snap-shot, the actuator control system 200 stops the throttle causing the front wheel to return to ground height 704 after it has passed over the bump 701. In the third snap-shot, the actuator control system 200 applies a braking force 705 to the rear-tires to lift the tires 706 over the bump 701. Finally, the braking force is released allowing the rear-tires to return to their original position 707 after passing over the bump 701.

Figure 14 shows how the actuator control system 200 may be modified by the control/software stack of a vehicle. The current stack may include 2 layers; the driver 1401 (human or autonomous) and the low-level actuators controller 1402. Currently, the driver 1401 (human or autonomous) indicates a desired acceleration/deceleration and turning/yaw-rate using the gas/brake pedals and steering wheel and the actuators controllers 1402 implement these desired behaviors. Note that on older vehicles low-level actuator controllers 1402 may be simple feed-through i.e. the driver is directly controlling the throttle via a cable, the brakes via a pneumatic cylinder, and the steering angle via a mechanical linkage. In modern vehicles, the low-level actuator controllers are often more intelligent. However, the actuator control system 200 according to the invention is compatible with any type of low-level actuator controller.

The actuator control system 200 according to the invention may add a new controller layer 1403 between the driver and the actuator controllers. The new controller layer 1403 is the torque allocation module which determines the set-points of each of actuators to both maintain the driving characteristics that the driver expects (i.e. desired acceleration and yaw/turning are achieved) while improving passenger comfort. According to some embodiments of the present invention, it is possible to provide these addition benefits since it is applied to vehicles with independently actuated throttle/brake for each wheel. Thus, there are 3 additional degrees of freedom for achieving the desired driving profile. The torque allocation module uses the additional degrees of freedom to improve passenger comfort.

Also, the various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Further, the embodiments of the present disclosure may be embodied as a method, of which an example has been provided. The acts performed as part of the method may be ordered in any suitable way. Accordingly, embodiments may be constructed in which acts are performed in an order different than illustrated, which may include performing some acts concurrently, even though shown as sequential acts in illustrative embodiments. Further, use of ordinal terms such as first, second, in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

**Claims**

1. A vehicle (100) comprising a control system (200) for controlling motions of the vehicle (100), the vehicle (100) having wheels, the control system (200) comprising:

   suspension units configured to support the wheels respectively driven by motors controlled by throttles;
   a set of sensors (1201) configured to detect the motions of the vehicle (100);
   a road roughness sensor (1302);
   an input/output interface, I/O, (210) connected to: the set of sensors (1201) and the road roughness sensor (1302),
   one or more processor (220),
   a memory device (230) storing computer-implemented programs including a road roughness prediction program (231), an actuator control program (232) and a throttle allocator program (233),
   an allocation module (1202) implemented through execution, by the one or more processor (220), of the throttle allocator program (233), and configured, in connection with the sensors (1201), to generate and transmit allocated throttle signals to the throttles to minimize the motion by solving an optimization problem related to the motion by executing an optimization algorithm that computes a throttle/brake allocation that minimizes chassis motion in real-time; and

a motor control unit configured to drive each of the motors (1203-1, 1203-2, 1203-3, 1203-4) via the throttles according to the allocated throttle signals,

wherein the motions are represented by lift (106), pitch (105), and roll (101) values of the vehicle (100), and the allocated throttle signals drive the motors (1203-1, 1203-2, 1203-3, 1203-4) to move the wheels (1101, 1103) on the right side closer together and the wheels (1102, 1104) on the left side farther apart to create a roll motion in response to a detected roll motion in the opposite direction;

wherein a road roughness measured by the road roughness sensor (1302) is used to compute traction forces, to be allocated to the wheels, and a steering angle of the vehicle (100), to be set, to reduce the chassis motion due to road roughness while maintaining drivability.

2. A method for controlling motions of a vehicle (100) having wheels and suspension units configured to support the wheels (1101, 1102, 1103, 1104), comprising:

driving the wheels (1101, 1102, 1103, 1104) respectively by motors controlled by throttles;

measuring the motions of the vehicle (100) using a set of sensors (1201);

computing and transmitting allocated throttle signals to the throttles to minimize the motion by solving an optimization problem related to the motion by executing an optimization algorithm that computes a throttle/brake allocation that minimizes chassis motion in real-time; **characterized by**

driving each of the motors via the throttles according to the allocated throttle signals, wherein the allocated throttle signals drive the motors to move the wheels (1101, 1103) on the right side closer together and the wheels (1102, 1104) on the left side farther apart to create a roll motion in response to a detected roll motion in the opposite direction, wherein the motions are represented by lift (106), pitch (105), and roll (101) values of the vehicle (100),

using a road roughness measured by a road roughness sensor (1302) to compute traction forces and a steering angle of the vehicle (100), and

allocating the computed traction forces to the wheels and setting the computed steering angle, to reduce the chassis motion due to road roughness while maintaining drivability.

**Patentansprüche**

1. Fahrzeug (100), umfassend ein Steuersystem (200) zum Steuern von Bewegungen des Fahrzeugs (100), wobei das Fahrzeug (100) Räder aufweist und das Steuersystem (200) umfasst:

Aufhängungseinheiten, die eingerichtet sind, die Räder zu stützen, die jeweils von Motoren angetrieben werden, die durch Drosselklappen gesteuert werden;

einen Satz von Sensoren (1201), die eingerichtet sind, die Bewegungen des Fahrzeugs (100) zu detektieren;

einen Fahrbahnrauhigkeitssensor (1302);

eine Eingabe-/Ausgabeschnittstelle, I/O, (210), die verbunden ist mit: dem Satz von Sensoren (1201) und dem Fahrbahnrauhigkeitssensor (1302),

einen oder mehrere Prozessoren (220),

eine Speichervorrichtung (230), die computerimplementierte Programme speichert, einschließlich eines Fahrbahnrauhigkeits-Vorhersageprogramms (231), eines Aktuatorsteuerprogramms (232) und eines Drosselzuordnungsprogramms (233),

ein Zuordnungsmodul (1202), das durch die Ausführung des Drosselzuordnungsprogramms (233) durch den einen oder mehrere Prozessoren (220) implementiert ist und in Verbindung mit den Sensoren (1201) eingerichtet ist, zugeordnete Drosselsignale zu erzeugen und an die Drosselklappen zu übertragen, um die Bewegung durch Lösen eines Optimierungsproblems in Bezug auf die Bewegung zu minimieren, indem ein Optimierungsalgorithmus ausgeführt wird, der eine Drossel-/Bremszuordnung berechnet, die die Fahrgestellbewegung in Echtzeit minimiert; und

eine Motorsteuereinheit, die eingerichtet ist, jeden der Motoren (1203-1, 1203-2, 1203-3, 1203-4) über die Drosselklappen entsprechend den zugeordneten Drosselsignalen anzusteuern,

wobei die Bewegungen durch Hubwerte (106), Nickwerte (105) und Rollwerte (101) des Fahrzeugs (100) repräsentiert werden, und die zugeordneten Drosselsignale die Motoren (1203-1, 1203-2, 1203-3, 1203-4) ansteuern, um die Räder (1101, 1103) auf der rechten Seite näher zusammen und die Räder (1102, 1104) auf der linken Seite weiter auseinander zu bewegen, um eine Rollbewegung in Reaktion auf eine erfasste Rollbewegung in der entgegengesetzten Richtung zu erzeugen;

wobei eine vom Fahrbahnrauhigkeitssensor (1302) gemessene Fahrbahnrauhigkeit zur Berechnung von den Rädern zuzuordnenden Traktionskräften und eines einzustellenden Lenkwinkels des Fahrzeugs (100) verwendet wird, um die Fahrgestellbewegung aufgrund der Fahrbahnrauhigkeit zu verringern und gleichzeitig die Fahrbarkeit aufrechtzuerhalten.

2. Verfahren zum Steuern von Bewegungen eines Fahrzeugs (100) mit Rädern und Aufhängungseinheiten, die eingerichtet sind, die Räder (1101, 1102, 1103, 1104) zu stützen, umfassend:

Antreiben der Räder (1101, 1102, 1103, 1104) durch Motoren, die durch Drosselklappen gesteuert werden;

Messen der Bewegungen des Fahrzeugs (100) mit einem Satz von Sensoren (1201);

Berechnen und Übertragen zugeordneter Drosselsignale an die Drosselklappen, um die Bewegung zu minimieren, indem ein auf die Bewegung bezogenes Optimierungsproblem gelöst wird, indem ein Optimierungsalgorithmus ausgeführt wird, der eine Drossel-/Bremszuordnung berechnet, die die Fahrgestellbewegung in Echtzeit minimiert, **gekennzeichnet durch**

Ansteuern jedes der Motoren über die Drosselklappen gemäß den zugeordneten Drosselsignalen, wobei die zugeordneten Drosselsignale die Motoren ansteuern, um die Räder (1101, 1103) auf der rechten Seite näher zusammen und die Räder (1102, 1104) auf der linken Seite weiter auseinander zu bewegen, um eine Rollbewegung als Reaktion auf eine erfasste Rollbewegung in der entgegengesetzten Richtung zu erzeugen, wobei die Bewegungen durch Hubwerte (106), Nickwerte (105) und Rollwerte (101) des Fahrzeugs (100) dargestellt werden,

Verwenden einer von einem Fahrbahnrauhigkeitssensor (1302) gemessenen Fahrbahnrauhigkeit, um Traktionskräfte und einen Lenkwinkel des Fahrzeugs (100) zu berechnen, und

Zuordnen der berechneten Traktionskräfte zu den Rädern und Einstellung des berechneten Lenkwinkels, um die Fahrwerksbewegungen aufgrund von Fahrbahnunebenheiten zu verringern und gleichzeitig die Fahrbarkeit zu erhalten.

**Revendications**

1. Véhicule (100) comprenant un système de commande (200) pour commander des mouvements du véhicule (100), le véhicule (100) présentant des roues, le système de commande (200) comprenant :

des unités de suspension configurées pour supporter les roues entraînées respectivement par des moteurs commandés par des accélérateurs;

un ensemble de capteurs (1201) configuré pour détecter les mouvements du véhicule (100);

un capteur de rugosité de route (1302);

une interface d'entrée/sortie, E/S, (210) connectée à: l'ensemble de capteurs (1201) et au capteur de rugosité de route (1302),

un ou plusieurs processeurs (220),

un dispositif de mémoire (230) stockant des programmes mis en œuvre par ordinateur incluant un programme de prédiction de rugosité de route (231), un programme de commande d'actionneur (232) et un programme d'attribution d'accélérateur (233),

un module d'attribution (1202) mis en œuvre par exécution, par les un ou plusieurs processeurs (220), du programme d'attribution d'accélérateur (233), et configuré, en association avec les capteurs (1201), pour générer et transmettre des signaux d'accélérateur attribué aux accélérateurs afin de minimiser le mouvement en résolvant un problème d'optimisation lié au mouvement en exécutant un algorithme d'optimisation qui calcule une attribution d'accélérateur/frein qui minimise le mouvement de châssis en temps réel; et

une unité de commande de moteur configurée pour entraîner chacun des moteurs (1203-1, 1203-2, 1203-3, 1203-4) via les accélérateurs selon les signaux d'accélérateur attribué,

dans lequel les mouvements sont représentés par des valeurs de portance (106), de pas (105) et de roulis (101) du véhicule (100), et les signaux d'accélérateur attribué entraînent les moteurs (1203-1, 1203-2, 1203-3, 1203-4) pour rapprocher les roues (1101, 1103) sur le côté droit l'une de l'autre et pour éloigner les roues (1102, 1104) sur le côté gauche l'une de l'autre afin de créer un mouvement de roulis en réponse à un mouvement de roulis détecté dans la direction opposée;

dans lequel une rugosité de route mesurée par le capteur de rugosité de route (1302) est utilisée pour calculer des forces de traction, à attribuer aux roues, et un angle de braquage du véhicule (100), à définir, afin de réduire le mouvement du châssis dû à la rugosité de route tout en maintenant la motricité.

2. Procédé pour commander des mouvements d'un véhicule (100) présentant des roues et des unités de suspension configurées pour supporter les roues (1101, 1102, 1103, 1104), comprenant les étapes consistant à :

entraîner les roues (1101, 1102, 1103, 1104) respectivement par l'intermédiaire de moteurs commandés par des accélérateurs ;

mesurer les mouvements du véhicule (100) en utilisant un ensemble de capteurs (1201) ;

calculer et transmettre les signaux d'accélérateur attribué aux accélérateurs pour minimiser le mouvement en résolvant un problème d'optimisation lié au mouvement en exécutant un algorithme d'optimisation qui calcule une attribution d'accélérateur/frein qui minimise un mouvement de châssis en temps réel ; **caractérisé par** les étapes consistant à

entraîner chacun des moteurs via les accélérateurs selon les signaux d'accélérateur attribué, dans lequel les signaux d'accélérateur attribués entraînent les moteurs pour rapprocher les roues (1101, 1103) sur le côté droit l'une de l'autre et pour éloigner les roues (1102, 1104) sur le côté gauche l'une de l'autre afin de créer un mouvement de roulis en réponse à un mouvement de roulis détecté dans la direction opposée, dans lequel les mouvements sont représentés par des valeurs de portance (106), de pas (105) et de roulis (101) du véhicule (100),

utiliser une rugosité de route mesurée par un capteur de rugosité de route (1302) afin de calculer des forces de traction et un angle de braquage du véhicule (100), et

attribuer les forces de traction calculées aux roues et définir l'angle de braquage calculé, afin de réduire le mouvement du châssis en raison de la rugosité de route tout en maintenant la motricité.

FIG.1

EP 4 117 940 B1

FIG.2

**200**

1201 — Vehicle motion sensors

1302 — Road Roughness Sensors

210 — I/O Interface

220 — Processor

230 — Memory device

233 — Throttle Allocator

232 — Actuator Control

231 — Road Roughness Prediction

1402 — Actuator controller

Motor 1 — 1203-1
Motor 2 — 1203-2
Motor 3 — 1203-3
Motor 4 — 1203-4

# FIG.3A

## Side view

**Rear left**

308a
$Z^+$
304a
303a
$X^+$
306a
307a
312a

**Rear right**

308b
$Z^+$
304b
303b
$X^+$
306b
307b
312b

# FIG.3B

## Rear view

left
304a
305a
305b
304b
right
310a
310b
$Z^+$
$Y^+$
305a
$N_{rr}$

## Top view

$X^+$
301a
$Y^+$
309a
left

$X^+$
301b
$Y^+$
309b
right

EP 4 117 940 B1

FIG.4B

FIG.4A

FIG.5

FIG.6

605

607

603

601

606

602

604

FIG.7

FIG.8

FIG.9

FIG.10

FIG.11

FIG.12

1201 — Vehicle Motion Sensors

1202 — Throttle Allocation Module

Motor 1    Motor 2    Motor 3    Motor 4

1203-1    1203-2    1203-3    1203-4

EP 4 117 940 B1

FIG.13

## FIG.14A

## FIG.14B

Controller Hierarchy – Traditional Vehicle

1401 — Driver
Human or

Velocity
Regulation

Lane Keeping

1402 — Actuator Control

Steering Control

Throttle/Brake
Control

1401 — Driver
(Human or

Velocity
Regulation

Lane Keeping

1403 — Throttle Allocator

Improve Passenger
Comfort

1402 — Actuator Control

Steering Control

Throttle/Brake
Control x4

EP 4 117 940 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102017116733 A1

- WO 2012173354 A

**Non-patent literature cited in the description**

- **NAOYA, OCHI et al.** Proposal of roll angle control method using positive and negative anti-force for electric vehicle with four in-wheel motors. *IEEE Int. Conf. on Mechatronics (ICM)*, 27 February 2013

- Driving safety and comfort enhancements through efficient usage of e-powertrain functions. **SCHRUTH, R. et al.** 2013 WORLD ELECTRIC VEHICLE SYMPOSIUM AND EXHIBITION (EVS27). IEEE, 17 November 2013